## Europäisches Patentamt
## European Patent Office
## Office européen des brevets

(19)

(11) Numéro de publication: **0 198 781**
**B1**

(12) # FASCICULE DE BREVET EUROPEEN

(45) Date de publication du fascicule du brevet:
04.04.90

(51) Int. Cl.⁴: **A01D 78/12**

(21) Numéro de dépôt: **86440027.0**

(22) Date de dépôt: **08.04.86**

(54) **Machine de fenaison pour l'andainage en marche avant et en marche arrière.**

(30) Priorité: **10.04.85 FR 8505501**

(43) Date de publication de la demande:
**22.10.86 Bulletin 86/43**

(45) Mention de la délivrance du brevet:
**04.04.90 Bulletin 90/14**

(84) Etats contractants désignés:
**AT CH DE IT LI NL**

(56) Documents cités:
**EP-A- 0 175 190**
**DE-A- 3 120 370**
**DE-U- 8 103 974**
**FR-A- 2 415 955**
**FR-A- 2 513 068**

(73) Titulaire: **KUHN S.A., 4, impasse des Fabriques,
F-67700 Saverne(FR)**

(72) Inventeur: **Lang, Denis, 7, rue de Monswiller, Ottersthal
F-67700 Saverne(FR)**

(74) Mandataire: **Andres, Jean-Claude, KUHN S.A. 4, impasse
des Fabriques, F-67700 Saverne(FR)**

## Description

La présente invention se rapporte aux machines de fenaison comprenant un châssis muni d'au moins une roue râteleuse avec plusieurs bras portant des outils de travail. Durant le travail cette roue râteleuse est entraînée en rotation autour d'un axe support sensiblement vertical, sur lequel est disposé une came de guidage pouvant être déplacée en rotation par l'intermédiaire d'un dispositif de manœuvre qui est lui-même déplaçable en rotation, ladite came de guidage pouvant être arrêtée dans au moins deux positions différant d'environ 180°, au moyen d'un loquet et d'un arrêtoir à encoches. Dans cette came se déplacent des galets de manivelles de commande solidaires des bras porte-outils qui sont ainsi commandés de sorte qu'ils font pivoter leurs outils de travail, sur un domaine partiel de leur trajectoire, vers le haut et la direction opposée au sens de rotation, en vue de la confection d'un andain.

Cette rotation de la came de guidage permet d'andainer le fourrage aussi bien en marche avant qu'en marche arrière. Cette possibilité de pouvoir travailler en marche arrière évite de rouler avec le tracteur sur le fourrage étalé sur le sol. Ceci est particulièrement avantageux lorsque le sol est humide et risque de mouiller ledit fourrage. De plus, il n'est pas nécessaire de faire demi-tour en bout de terrain, cette manœuvre étant souvent dangereuse sur les terrains en pente.

Sur une machine de ce genre, décrite dans la demande de modèle d'utilité DE-U 8 103 974, le dispositif de manœuvre a la forme d'une couronne dentée. Il est actionné au moyen d'une manivelle munie d'un pignon conique qu'il faut tourner manuellement. Cette manivelle commande aussi le loquet qui bloque le dispositif de manœuvre et la came de guidage. Pour le déverrouillage la manivelle doit être poussée axialement, de sorte qu'elle dégage ledit loquet du dispositif de manœuvre. Le retour dans la position verrouillée est assuré au moyen d'un ressort de pression agissant sur la manivelle.

Cet agencement fait appel à une manivelle pour régler la position de la came de guidage. Or, une telle manivelle n'est souvent pas accessible à partir du siège du tracteur utilisé pour déplacer et animer la machine. L'utilisateur est alors obligé de se déplacer à chaque réglage. Par ailleurs, dans cet agencement, il faut effectuer deux opérations avant chaque réglage de la came de guidage, l'une consistant à déverrouiller le dispositif de manœuvre en poussant sur la manivelle et la seconde à déplacer ledit dispositif de manœuvre en tournant la manivelle. Cette dernière opération est relativement lente. De plus, tout en tournant la manivelle, il faut maintenir la pression axiale afin que son pignon engrène avec le dispositif de manœuvre et que le loquet reste dans la position déverrouillée. Ceci est pénible et fastidieux pour l'opérateur.

Dans la demande de brevet EP-A 0 175 190 (document appartenant à l'état de la technique défini selon l'article 54(3) de la CBE) il est décrit une machine sur laquelle le dispositif de manœuvre a également la forme d'une couronne dentée pouvant être mise en rotation au moyen d'une manivelle munie d'un pignon conique. Dans ce mode de réalisation, le dispositif de manœuvre déverrouille et entraîne le loquet de verrouillage lorsqu'il est déplacé au moyen de la manivelle. Sur cette machine, le réglage de la came de guidage au moyen de la manivelle est également relativement lent et pas commode à effectuer.

La présente invention a pour but de remédier aux inconvénients précités. Elle doit notamment permettre une simplification des opérations à exécuter en vue de déplacer la came de guidage. De plus, les moyens proposés doivent être d'un fonctionnement sûr et rapide et avoir un coût peu élevé.

A cet effet, une importante caractéristique de l'invention consiste en ce que le dispositif de manœuvre est déplaçable en rotation par traction, qu'il assure lui-même par sa rotation le déverrouillage de la came de guidage et son déplacement en rotation lorsqu'il est déplacé dans une direction donnée et qu'il est libre en rotation par rapport à ladite came de guidage lorsqu'il est déplacé dans la direction opposée.

Dans cet agencement, l'utilisateur a simplement à effectuer quelques tractions sur le dispositif de réglage pour réaliser à la fois le déverrouillage de la came de guidage et son déplacement. Ces tractions peuvent être assurées au moyen d'un organe tel qu'un câble qui peut être amené jusqu'au siège de n'importe quel tracteur. De ce fait, l'utilisateur peut opérer sans avoir à se déplacer. En sus, le réglage est très rapide, et peut donc être répété de nombreuses fois sans que cela représente une importante gêne.

Conformément à l'invention, ledit dispositif de manœuvre actionne un loquet qui peut être articulé sur une partie non tournante de la roue râteleuse, en vue du déverrouillage de la came de guidage. Pour déplacer ladite came de guidage en rotation il peut comporter un entraîneur qui coopère positivement avec des dents formant une roue à rochet et qui sont reliées à la came de guidage. Avec ces moyens simples, on obtient des déplacements sûrs, à la fois du loquet de verrouillage et de la came de guidage.

Grâce à la simplicité du dispositif selon l'invention son coût est relativement modeste. Ce dispositif peut par ailleurs s'adapter sur les machines non équipées et qui sont déjà en service, sans qu'il soit nécessaire d'y apporter de grandes modifications.

D'autres caractéristiques et avantages de l'invention ressortiront de la description ci-après avec référence aux dessins annexés, lesquels représentent à titre d'exemple non limitatif, une forme de réalisation de l'invention.

Dans ces dessins:

La figure 1 représente une coupe verticale d'une roue râteleuse selon l'invention,

la figure 2 représente, à plus grande échelle, une coupe du dispositif de manœuvre,

la figure 3 représente une coupe suivant le plan III–III de la figure 2,

la figure 4 représente une vue de dessus du dispositif selon l'invention en position verrouillée,

la figure 5 représente une vue analogue à celle de la figure 4, le dispositif étant actionné.

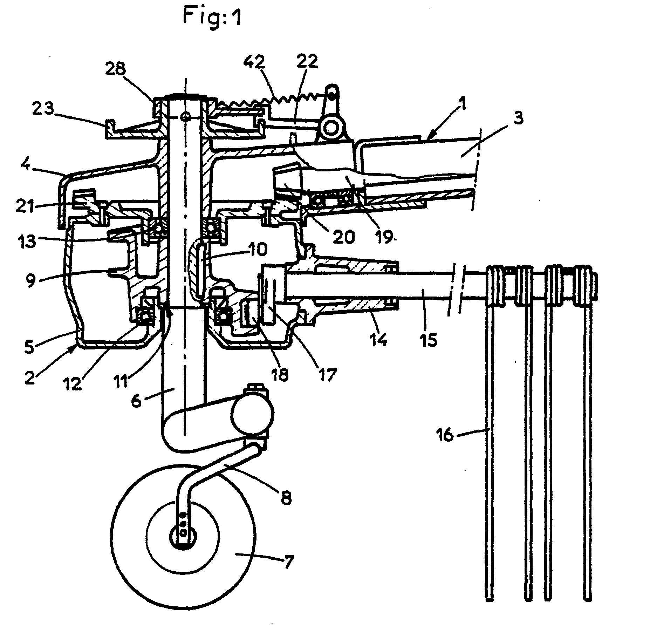

Tel que cela ressort de la figure 1, la machine selon l'invention comporte un châssis (1) muni d'une roue râteleuse (2). Ledit châssis n'est que partiellement représenté. Il se compose notamment d'une poutre (3) qui porte à l'une de ses extrémités la roue râteleuse (2) et à son autre extrémité un dispositif d'accouplement trois points permettant d'atteler la machine au dispositif de relevage d'un tracteur d'entraînement.

La roue râteleuse (2) se compose d'un corps central en deux parties (4 et 5) montées sur un axe support (6) sensiblement vertical. Cet axe (6) porte à son extrémité inférieure deux roulettes (7) prenant appui sur le sol. Ces roulettes sont du genre pivotantes et peuvent être réglées en hauteur le long du pivot (8).

Sur ledit axe (6) est en sus montée une came de guidage (9). Elle est immobilisée sur ce dernier au moyen d'une clavette (10). Des cales de réglage (11) peuvent éventuellement être disposées sous la came (9) afin de déterminer sa position.

La partie supérieure (4) précitée est fixée à la poutre (3). La partie inférieure (5) est montée libre en rotation sur des roulements à billes (12 et 13). Cette partie inférieure (5) est munie de plusieurs paliers (14) à travers lesquels s'étendent des bras (15). Chacun de ces bras (15) porte à son extrémité la plus éloignée de la partie (5) des outils de travail (16) constitués par des fourches de râtelage. A son extrémité située à l'intérieur de cette partie (5), chaque bras (15) porte une manivelle de commande (17) qui est munie d'un galet (18) engagé dans la came de guidage (9).

Durant le travail, la partie inférieure (5) avec les bras porte-outils (15) est entraînée en rotation autour de l'axe support (6). Cet entraînement s'effectue au moyen d'un arbre (19) logé partiellement dans la poutre (3). L'une des extrémités de cet arbre (19) comporte un pignon (20) qui engrène avec une couronne (21) solidaire de la partie (5), tandis que son autre extrémité est reliée, d'une manière connue en soi, à l'arbre de prise de force du tracteur d'entraînement. Lors de cette rotation, les galets (18) se déplacent dans la came de guidage (9). Cette dernière comporte une dénivellation de telle sorte que les galets (18) fassent pivoter, par l'intermédiaire des manivelles (17), les bras porte-outils (15) autour de leurs axes longitudinaux. En raison de ce pivotement, les outils de travail (16) se déplacent, sur un domaine partiel de leur trajectoire, vers le haut et la direction opposée au sens de rotation de la roue râteleuse. Ils déposent ainsi le fourrage râtelé sous la forme d'un andain.

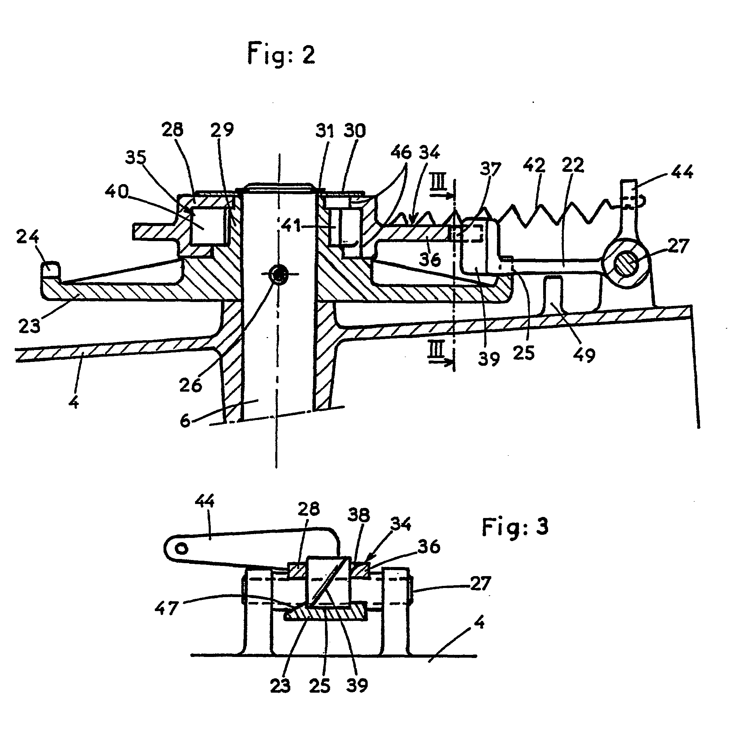

La came de guidage (9) peut être déplacée en rotation avec l'axe support (6) et arrêtée dans au moins deux positions différent d'environ 180°. Elle peut être verrouillée dans chacune de ces positions au moyen d'un loquet (22) articulé sur la partie non tournante (4) et d'un arrêtoir (23) avec deux encoches (24 et 25). Tel que cela ressort de la figure 2, cet arrêtoir (23) est rendu solidaire de l'axe support (6) au moyen d'une goupille (26). Les deux encoches (24 et 25) sont symétriques par rapport à l'axe support (6). L'axe d'articulation (27) du loquet (22) est sensiblement horizontal. Ce dernier peut donc se déplacer dans un plan vertical en vue du blocage ou du déblocage de la came de guidage (9).

Ladite rotation de la came (9) permet de déplacer d'environ 180° le domaine de la trajectoire sur lequel les outils de travail (16) pivotent tel que décrit précédemment, pour la formation de l'andain. On peut ainsi travailler en marche avant ou en marche arrière avec la même machine.

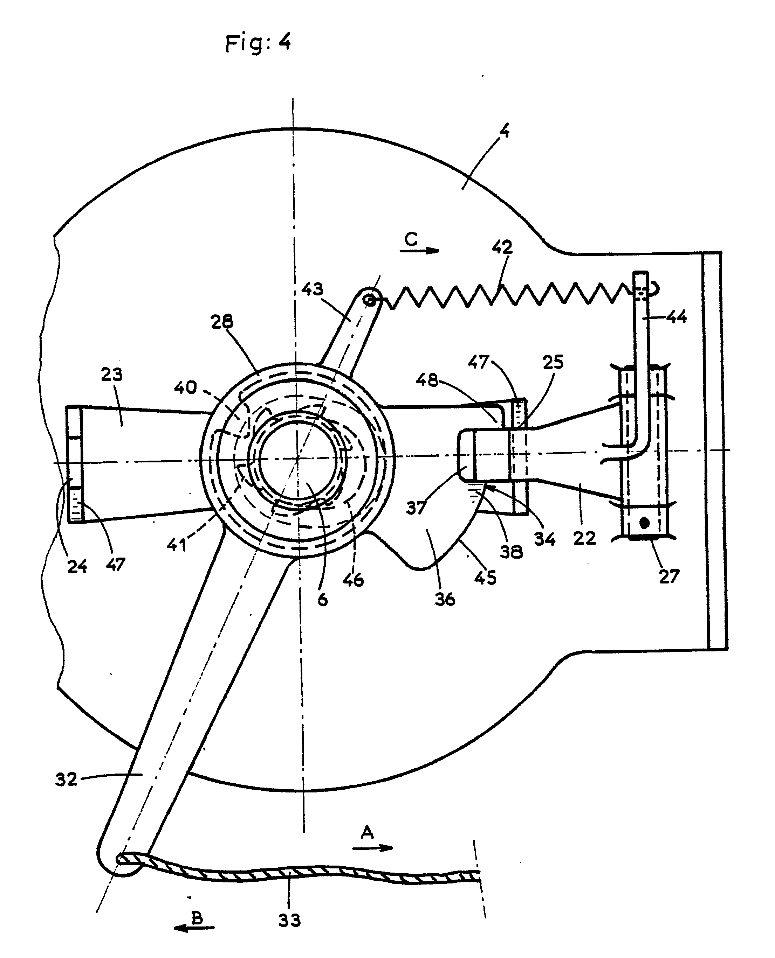

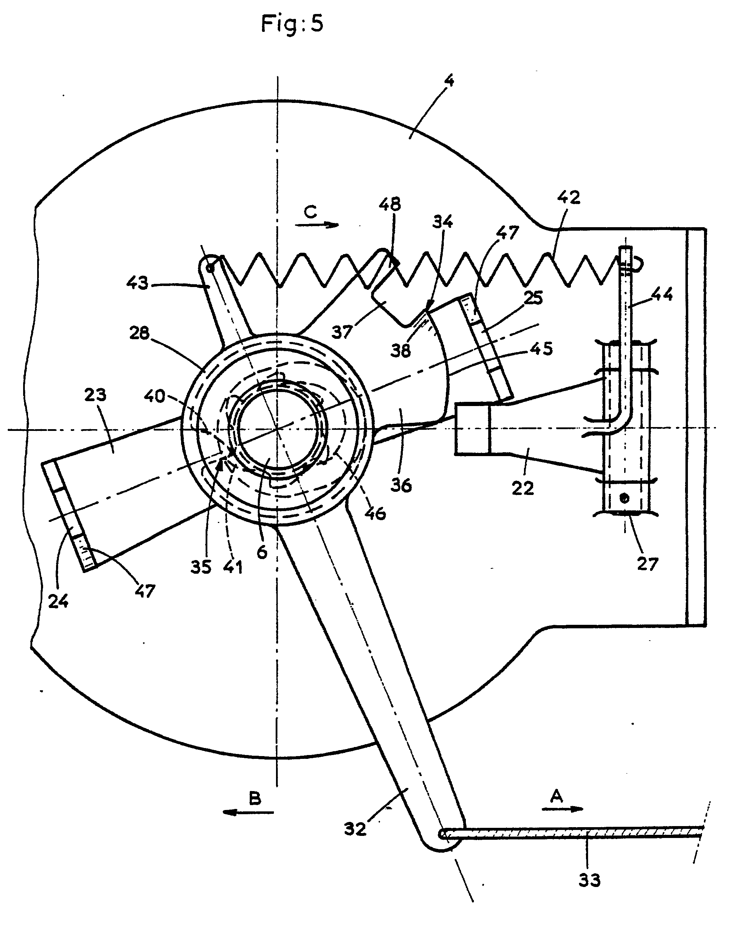

Conformément à une importante caractéristique de l'invention, la machine comporte un dispositif de manoeuvre (28) assurant à la fois le déverrouillage de la came du guidage (9) et son déplacement en rotation. Comme cela ressort notamment de la figure 2, ce dispositif (28) a une forme cylindrique et se loge sur un prolongement (29) de l'arrêtoir (23). Son immobilisation axiale est assurée au moyen d'une rondelle (30) et d'un circlips (31). Il comporte un bras d'actionnement (32) permettant de le déplacer en rotation (voir figures 4 et 5). A ce bras est avantageusement relié un câble souple (33) qui s'étend jusqu'au tracteur et permet au conducteur de manoeuvrer le dispositif (28) à partir du siège dudit tracteur.

Le dispositif de manoeuvre (28) comporte par ailleurs un moyen (34) pour déplacer le loquet (22) en vue du déverrouillage de la came (9) et, un moyen (35) pour entraîner la came (9) en rotation. Ledit moyen (34) est constitué par une patte (36) avec un dégagement (37) dans lequel pénètre l'extrémité du loquet (22), ladite patte étant munie d'une rampe inclinée (38) qui coopère avec une autre rampe inclinée (39) prévue à l'extrémité du loquet (22) (voir figure 3). La simple rotation du dispositif (28) dans le sens indiqué par la flèche (A) sur les figures 4 et 5, permet de déplacer le loquet (22) vers le haut. Ce déplacement est obtenu par suite du glissement de la rampe (38) sous la rampe (39) du loquet (22). Ledit déplacement vers le haut a pour effet de dégager le loquet (22) de l'encoche (25) de l'arrêtoir (23) et de libérer ce dernier ainsi que l'axe support (6) et la came de guidage (9) qui forment un ensemble de pièces liées entre elles.

Ledit moyen (35) pour déplacer la came (9) en rotation est constitué par un entraîneur (40) situé à l'intérieur du volume délimité par la forme cylindrique du dispositif de manoeuvre (28). Cet entraîneur (40) coopère avec des dents (41) formant en quelque sorte une roue à rochet. Celles-ci sont solidaires de la partie (29) de l'arrêtoir (23) sur laquelle est monté le dispositif de manoeuvre (28). Ainsi, lorsque l'arrêtoir (23) est débloqué et que l'opérateur continue à faire tourner le dispositif de manoeuvre (28) en tirant sur le câble (33) dans le sens de la flèche (A), l'entraîneur (40) entre en prise avec une des dents (41). Ledit entraîneur déplace alors l'ensemble constitué par l'arrêtoir (23), l'axe support (6) et la came (9) en rotation en vue du déplacement de la zone dans laquelle est formé l'andain. Il est possible de procéder à ce déplacement lorsque la roue râteleuse est immobile ou lorsqu'elle est elle-même entraînée en rotation. Dans ce dernier cas, les galets (18) poussent favorablement la came (9). Il est aussi préférable d'opérer lorsque la machine est soulevée afin que les roulettes (7) ne frottent pas sur le sol.

Lorsque la came de guidage (9) est verrouillée, comme cela est représenté sur la figure 4, l'entraîneur (40) du dispositif de manoeuvre (28) est décalé par rapport à la dent (41) qui en est la plus rapprochée. Grâce à ce décalage, la rotation de l'ensemble constitué par l'arrêtoir (23), l'axe support (6) et la came de guidage (9) ne commence que lorsque le loquet (22) est complètement dégagé du cran (25).

Il ressort de la description ci-dessus que le dispositif de manoeuvre (28) est lié en rotation avec l'arrêtoir (23) et par l'intermédiaire de ce dernier avec l'axe support (6) et la came (9) lorsqu'il est déplacé dans le sens de la flèche (A) (figures 4 et 5). Il est toutefois libre en rotation ans le sens opposé qui est indiqué par la flèche (B) sur ces mêmes figures. Cette libre rotation dans le sens (B) permet de faire revenir le dispositif de manoeuvre (28) seul dans sa position de départ. Ainsi, pour obtenir une rotation de 180° de la came de guidage (9), il suffit de déplacer deux ou trois fois le dispositif de manoeuvre (28) dans les directions (A puis B) d'un angle d'environ 60° à 90°. L'avantage de cette solution est que le bras (32) reste toujours du même côté par rapport à l'axe support (6) et peut constamment être actionné, en vue de la rotation de la came (9), en exerçant une traction dans la direction (A).

Le déplacement libre du dispositif de manoeuvre (28) dans la direction (B) se fait automatiquement au moyen d'un ressort de rappel (42). Celui-ci est accroché à un petit levier (43) solidaire du dispositif de manoeuvre (28) et à un bras coudé (44) solidaire du loquet (22). Il exerce ainsi une traction dans le sens de la flèche (C) qui provoque ledit déplacement libre dès que cesse la traction sur le câble souple (33).

Ce ressort pourrait toutefois aussi être accroché au levier (43) et à un autre point fixe de la machine.

Lors de ce déplacement libre dans la direction (B), le dispositif de manoeuvre (28) est soumis à un déplacement radial afin de dégager l'entraîneur (40) des dents (41). Ce déplacement radial est provoqué par les dents (41) et la face extérieure (45) de la patte (36) du dispositif de manoeuvre (28). Cette face (45) s'appuie contre l'extrémité du loquet (22) et repousse ledit dispositif. Pour cela cette face (45) est réalisée de telle sorte qu'elle s'éloigne progressivement de l'axe support (6), la partie la plus rapprochée dudit axe étant celle qui vient en premier en contact avec le loquet (22). En vue de ce déplacement radial, les alésages (46) servant au guidage du dispositif de manoeuvre sur l'arrêtoir (23) ont une forme oblongue. Ce déplacement permet aussi le retour du loquet (22) dans le dégagement (37) de cette patte (36).

Une fois que la manoeuvre consistant à faire tourner la came de guidage de 180° est pratiquement terminée, l'encoche (24 ou 25) qui correspond à la nouvelle position, se présente près du loquet (22). Celui-ci est alors légèrement soulevé par l'arrêtoir qui possède à cet effet à l'avant de chaque encoche (24 ou 25) une face inclinée (47). Ensuite ledit loquet (22) se place dans la nouvelle encoche (24 ou 25) sous l'effet de la traction du ressort de rappel (42). Il verrouille ainsi l'ensemble constitué par l'arrêtoir (23), l'axe support (6) et la came de guidage (9) dans la nouvelle position.

Dès que cette nouvelle position est atteinte, le dispositif de manoeuvre (28) est lui aussi ramené dans la position à partir de laquelle un nouveau déplacement du loquet (22) et de la came (9) est possible. Dans cette position qui est représentée sur la figure 4, l'extrémité du loquet (22) se situe dans l'évidement (37) de la patte (36). Ce retour du dispositif de manoeuvre (28) s'effectue par pivotement dans le sens de la flèche (B) sous l'effet de la traction du ressort (42). Ledit pivotement est limité au moyen d'une saillie (48) de la patte (36) qui bute contre le loquet (22).

Dans la position déverrouillée, le pivotement du loquet (22) est limité au moyen d'une butée (49) prévue sur la pièce fixe (4).

Il est bien évident qu'on pourra apporter à l'exemple de réalisation décrit ci-dessus divers perfectionnements, modifications ou additions ou remplacer certains éléments par des éléments équivalents sans pour autant sortir du cadre de la présente invention tel que défini dans les revendications.

**Revendications**

1. Machine de fenaison comprenant un châssis portant au moins une roue râteleuse munie de plusieurs bras (15) portant des outils de travail (16), cette roue étant entraînée en rotation autour d'un axe support (6) sensiblement vertical, sur lequel axe est disposée une came de guidage (9) pouvant être déplacée en rotation par l'intermédiaire d'un dispositif de manœuvre (28) qui est lui-même déplaçable en rotation, ladite came de guidage pouvant être arrêtée dans au moins deux positions différant d'environ 180° au moyen d'un loquet et d'un arrêtoir à encoches, et dans laquelle came de guidage se déplacent des galets (18) de manivelles de commande (17) solidaires des bras porte-outils (15) qui sont ainsi commandés de sorte qu'ils font pivoter leurs outils de travail (16), sur un domaine partiel de leur trajectoire, vers le haut et la direction opposée au sens de rotation de la roue râteleuse afin qu'ils déposent le fourrage sous la forme d'un andain, caractérisée par le fait que le dispositif de manœuvre (28) est déplaçable en rotation par traction, qu'il assure lui-même par sa rotation le déverrouillage de la came de guidage (9) et son déplacement en rotation lorsqu'il est déplacé dans une direction (A) et qu'il est libre en rotation par rapport à ladite came de guidage lorsqu'il est déplacé dans la direction opposée (B).

2. Machine selon la revendication 1, caractérisée par le fait que le dispositif de manœuvre (28) comporte un moyen de déverrouillage (34) constitué par une rampe inclinée (38) prévue sur une patte (36) solidaire du dispositif de manœuvre (28), cette rampe coopérant avec une autre rampe inclinée (39) prévue sur le loquet de verrouillage (22) qui est articulée sur une partie non tournante (4) de la roue râteleuse.

3. Machine selon la revendication 1, caractérisée par le fait que le dspositif de manoeuvre (28) comporte un moyen de déplacement (35) constitué par un entraîneur (40) qui coopère avec des dents (41) formant une roue à rochet, et qui sont reliées à la came du guidage (9).

4. Machine selon la revendication 3, caractérisée par le fait que lorsque la came de guidage (9) est verrouillée, l'entraîneur (40) du dispositif de manoeuvre (28) est décalé par rapport à la dent (41) qui en est la plus rapprochée.

5. Machine selon l'une quelconque des revendications précédentes, sur laquelle la came de guidage et le verrou à encoches sont liés à l'axe support et forment ainsi un ensemble déplaçable en rotation par rapport au châssis, caractérisée par le fait que le dispositif de manoeuvre (28) est guidé sur l'arrêtoir (23) et qu'il est lié en rotation avec ce dernier dans une direction et libre en rotation dans la direction opposée.

6. Machine selon l'une quelconque des revendications précédentes, caractérisée par le fait que le levier de manoeuvre (28) est déplaçable radialement.

7. Machine selon la revendication 6, caractérisée par le fait que le dispositif de manoeuvre (28) comporte une face (45) qui s'éloigne progressivement du centre et qui coopère avec le loquet (22) en vue du déplacement radial dudit dispositif.

8. Machine selon l'une quelconque des revendications 5 à 7, caractérisée par le fait que le dispositif de manoeuvre (28) comporte des alésages oblongs (46) en vue de son guidage sur l'arrêtoir (23).

9. Machine selon l'une quelconque des revendications précédentes, caractérisée par le fait que le dispositif de manoeuvre (28) est relié à une extrémité d'un ressort de rappel (42) dont l'autre extrémité est reliée au loquet (22).

10. Machine selon l'une quelconque des revendications précédentes, caractérisée par le fait que le dispositif de manoeuvre (28) comporte une butée de positionnement (48).

11. Machine selon l'une quelconque des revendications précédentes, caractérisée par le fait que le dispositif de manoeuvre (28) est actionné, d'une manière connue en soi, à partir du siège du tracteur, au moyen d'un câble souple (33).

12. Machine selon l'une quelconque des revendications précédentes, caractérisée par le fait que l'arrêtoir (23) comporte à l'avant de chaque encoche (24, 25) une rampe inclinée (47).

## Claims

1. A hay-making machine comprising a frame comprising at least one raking wheel provided with several arms (15) supporting working tools (16), said wheel being driven in rotation around an approximately vertical carrier axle (6), on which is arranged a guiding cam (9) movable in rotation by means of a driving device (28) which is also movable in rotation, said guiding cam (9) can be stopped in at least two positions differing about of 180° by a latch and a slotted stopping device and in which there are moving rollers (18) of driving cranks (17) solid with the tool-carrying arms (15) which are, in this way, driven so that they make their work tools (16) pivot on a part of their path upwardly and in the direction opposite to the direction of rotation of the raking wheel in order to lay the fodder down in the form of a windrow, characterized by the fact that the driving device (28) is movable in rotation by pulling, that it unbolts the guiding cam (9) by its rotation and moves said cam in rotation when it is displaced in a direction (A) and that it is free in rotation with regard to said guiding cam when it is displaced in the opposite direction (B).

2. A machine according to Claim 1, characterized by the fact that the driving device (28) comprises unlocking means (34) composed of an incline (38) foreseen on a cramp (36) solid with the driving device (28), said incline co-operating with another incline (39) foreseen on the locking latch (22), which is articulated on a non-rotating part (4) of the raking wheel.

3. A machine according to Claim 1, characterized by the fact that the driving device (28) comprises displacement means (35) made up by a drive element (40) co-operating with teeth (41) forming a ratchet wheel and connected to the guiding cam (9).

4. A machine according to Claim 3, characterized by the fact that the drive element (40) of the driving device (28) is offset in regard to the nearest tooth (41) when the guiding cam (9) is locked.

5. A machine according to anyone of the preceding Claims, on which the guiding cam and the slotted stopping device are connected to the carrier axle and thus form a set movable in rotation in regard to the frame, characterized by the fact that the driving device (28) is guided on the stopping device (23) and is linked in rotation with this latter in one direction and is free in rotation in the opposite direction.

6. A machine according to anyone of the preceding Claims, characterized by the fact that the driving lever (28) can be moved radially.

7. A machine according to Claim 6, characterized by the fact that the driving device (28) comprises a face (45) which is progressively further away from the center and co-operates with the latch (22) in order to displace radially said device.

8. A machine according to anyone of Claims 5 to 7, characterized by the fact that the driving device (28) comprises oblong bores (46) for its guiding on the stopping device (23).

9. A machine according to anyone of the preceding Claims, characterized by the fact that the driving device (28) is connected to one end of a drawback spring (42) the other end of which is connected to the latch (22).

10. A machine according to anyone of the preceding Claims, characterized by the fact that the driving device (28) comprises a positioning abutment (48).

11. A machine according to anyone of the preceding Claims, characterized by the fact that the driving device (28) is actuated in a manner known per se from the seat of the tractor vehicle, by means of a flexible rope (33).

12. A machine according to anyone of the preceding Claims, characterized by the fact that the stopping device (23) comprises an incline (47) in front of each slot (24, 25).

**Patentansprüche**

1. Heuwerbungsmaschine mit einem Rahmen welcher zumindest ein Rechrad trägt, das mit einer Vielzahl von Arbeitswerkzeugen (16) tragenden Armen (15) versehen ist und um eine annähernd senkrechte Tragachse (6) in Drehung versetzt wird, auf welcher eine Steuerkurve (9) gelagert ist, die mittels einer drehbaren Steuerungsvorrichtung (28) drehbar ist, wobei die Steuerkurve in zumindest zwei um ungefähr 180° auseinanderliegenden Stellungen mittels eines Riegels und eines mit Kerben versehenen Anschlags angehalten werden kann und in welcher Steuerkurve sich Rollen (18) von Antriebskurbeln (17) bewegen, die mit den Werkzeugen tragenden Arme (15) verbunden sind, die somit derart gesteuert sind, dass sie ihre Arbeitswerkzeuge (16) auf einem Teilbereich ihrer Umlaufbahn nach oben und in die entgegengesetzte Richtung der Drehrichtung des Rechrades schwenken um das Halmgut in Form eines Schwads abzulegen, dadurch gekennzeichnet, dass die Steuerungsvorrichtung (28) durch ziehen drehbar ist, dass sie selbst durch ihre Drehung die Entriegelung und die Drehung der Steuerkurve (9) verwirklicht wenn sie in eine Richtung (A) versetzt wird und dass sie freirotierend ist hinsichtlich der Steuerkurve wenn sie in die entgegengesetzte Richtung (B) versetzt wird.

2. Maschine nach Anspruch 1, dadurch gekennzeichnet, dass die Steuerungsvorrichtung (28) ein Entriegelungsmittel (34) aufweist, welches aus einer geneigten Ebene (38) gebildet ist, die auf einer mit der Steuerungsvorrichtung verbundenen Lasche (36) vorgesehen ist, welche Ebene mit einer anderen, auf dem Riegel (22) vorgesehenen geneigten Ebene (39) zusammenwirkt, der auf einem nichtdrehenden Teil (4) des Rechrades angelenkt ist.

3. Maschine nach Anspruch 1, dadurch gekennzeichnet, dass die Steuerungsvorrichtung (28) ein Verschiebungsmittel (35) aufweist, welches aus einem Mitnehmer (40) besteht, der mit Zähnen (41) zusammenwirkt, die ein Schiebrad bilden und mit der Steuerkurve (9) verbunden sind.

4. Maschine nach Anspruch 3, dadurch gekennzeichnet, dass der Mitnehmer (40) der Steuerungsvorrichtung (28) hinsichtlich des nächsten Zahnes (41) versetzt ist, wenn die Steuerkurve (9) verriegelt ist.

5. Maschine nach irgend einem der vorigen Ansprüche, auf welcher die Steuerkurve und der mit Kerben versehenen Riegel mit der Tragachse verbunden sind, sodass sie eine Einheit bilden welche hinsichtlich des Rahmens drehbar ist, dadurch gekennzeichnet, dass die Steuerungsvorrichtung (28) auf dem Anschlag (23) geführt ist und in einer Richtung mit diesem in Drehung verbunden ist und in der entgegengesetzten Richtung freirotierend ist.

6. Maschine nach irgend einem der vorigen Ansprüche, dadurch gekennzeichnet, dass der Steuerungshebel (28) radial bewegbar ist.

7. Maschine nach Anspruch 6, dadurch gekennzeichnet, dass die Steuerungsvorrichtung (28) eine Fläche (45) aufweist, die sich progressiv von der Mitte entfernt und mit dem Riegel (22) zusammenwirkt um diese Vorrichtung radial zu versetzen.

8. Maschine nach irgend einem der Ansprüche 5 bis 7, dadurch gekennzeichnet, dass die Steuerungsvorrichtung (28) Längslöcher (46) aufweist, welche zur ihrer Führung auf dem Anschlag (23) dienen.

9. Maschine nach irgend einem der vorigen Ansprüche, dadurch gekennzeichnet, dass die Steuerungsvorrichtung (28) mit einem Ende einer Spannfeder (42) verbunden ist, dessen anderes Ende mit dem Riegel (22) verbunden ist.

10. Maschine nach irgend einem der vorigen Ansprüche, dadurch gekennzeichnet, dass die Steuerungsvorrichtung (28) einen Positionierungsanschlag (48) aufweist.

11. Maschine nach irgend einem der vorigen Ansprüche, dadurch gekennzeichnet, dass die Steuerungsvorrichtung (28) in an sich bekannter Weise mittels einer Zuleitungsschnur (33) von dem Schleppersitz aus betätigt wird.

12. Maschine nach irgend einem der vorigen Ansprüche, dadurch gekennzeichnet, dass der Anschlag (23) vor jeder Kerbe (24, 25) eine geneigte Ebene (47) aufweist.

Fig:1

Fig: 2

Fig: 3

Fig: 4

Fig: 5